# FASCICULE DE BREVET EUROPEEN

(11) **EP 1 455 015 B1**
(45) Date de publication et mention de la délivrance du brevet: **14.02.2007**
(21) Numéro de dépôt: 04364020.0
(22) Date de dépôt: 03.03.2004
(51) Int. Cl.: E01B 7/02

(54) **Procédé de réalisation d'une aiguille bi-métal pour aiguillages ferroviaires**
Verfahren zur Herstellung einer bimetallischen Zunge für Eisenbahnweichen
Process for obtaining a bimetallic tongue for railway switches

(30) Priorité: 07.03.2003 FR 0302825
(43) Date de publication de la demande: 08.09.2004
(73) Titulaire: Dages, Didier, F-22360 Langueux (FR)
(72) Inventeur: Dages, Didier, F-22360 Langueux (FR)
(74) Mandataire: Lavialle, Bruno François Stéphane

(56) Documents cités:
- EP-B- 0 391 007
- DE-C- 522 144
- FR-A- 2 700 344
- GB-A- 387 940
- US-A- 1 334 466

## Description

La présente invention se rapporte à un procédé de production et de rénovation d'aiguilles constituant les aiguillages de voies ferrées.

Il est bien connu que les aiguilles sont dans leur grande majorité constituées de rails en acier au carbone qui sont cintrés et usinés pour avoir le profil de raccordement avec le rail adjacent et que, quel que soit le type de profil et les inventions pour minimiser contraintes et sollicitations, c'est l'extrémité la plus fine, soumise aux plus fortes sollicitations, qui se dégrade la plus vite par la perte due à l'usure de ses caractéristiques géométriques d'origine.

Ceci entraîne un remplacement complet de l'aiguille alors que, le plus souvent, sa partie géométrique réellement affectée par l'usure ne dépasse pas le tiers voire le quart de la longueur totale de l'aiguille et parfois moins, selon la courbure de l'aiguille.

Il est par ailleurs connu du document FR-A-2 700 344 un procédé de fixation d'un élément d'appareil de vole consistant à souder une entretoise d'une part à l'élément d'appareil de voie et d'autre part à un rail respectivement par étincelage et faisceau d'électrons.

La présente invention, telle que définie par la revendication 1 annexée, décrit un procédé permettant soit de rénover une aiguille du type précédent, et de le faire plusieurs fois, ceci avec un matériau de remplacement ayant une bien meilleure résistance à l'usure, soit de réaliser des aiguilles neuves directement selon ce procédé, aiguilles dont la durée de vie avant première rénovation sera très notablement améliorée du fait de la nature du métal constituant la partie terminale la plus fine de l'aiguille.

Les aiguilles ainsi constituées présentent donc le double avantage d'un coût de rénovation bien moindre et d'une durée de vie entre rénovations très nettement améliorée.

Avec ce procédé, l'aiguille rénovée ou l'aiguille neuve, d'un profil fonctionnel totalement identique à celui de l'aiguille à laquelle de se substitue, est constituée d'un assemblage Bimétal d'une partie dans sa plus grande longueur depuis l'extrémité de pivotement en acier à rail au carbone usinée et cintrée, raccordé via un insert en acier austéno-ferritique du type de celui décrit dans le brevet européen EP 0391 007B1, à une partie terminale effilée en acier à haute teneur en manganèse (supérieure à 10%) de la famille des aciers "Hadfield".

Cette partie terminale effilée sera avantageusement produite par moulage suivi d'une hypertrempe à l'eau depuis une température comprise entre 1030 et 1100°C puis d'un usinage superficiel et éventuellement de procédés de durcissement tels que pressage, explosion, martelage: l'acier à haute teneur en manganèse se prêtant mieux, de par sa nature, à la mise en forme par moulage, la plus proche de la forme finale, plutôt que par laminage et/ou forgeage.

Il en est de même pour l'insert en acier austéno-ferritique à bas carbone qui est produit par moulage suivi d'un traitement thermique de maintien entre 1030 et 1100°C avec hypertrempe à l'eau puis d'un usinage superficiel.

Cette technique confère une grande liberté dans le choix de la forme et des dimensions de l'insert et de la partie terminale en acier à haute teneur en manganèse.

Un exemple de réalisation préférentielle mais non limitative est décrit ci-après:
- la plus grande longueur de l'aiguille est faite, classiquement, en acier au carbone dit "acier à rail", en parlant d'un rail qui est tronçonné à longueur, cintré et usiné.

S'il s'agit d'une aiguille à rénover, l'aiguille usagée est tronçonnée au niveau de la zone effilée de la partie terminale présentant les pertes de géométrie d'origine nécessitant son changement.

Comme cette partie terminale "à usure préférentielle accélérée" est réalisée ensuite en acier moulé à haute teneur en manganèse, il n'y a pas de limite de standardisation dimensionnelle et cette partie sera plus ou moins longue selon la connaissance expérimentale acquise par la maintenance des réseaux ferrés de l'évolution des profils d'aiguille par usure, afin de réaliser le meilleur compromis "durée de vie - coût de la partie terminale - fréquence de changement".

Si nécessaire, pour améliorer la résistance à la fatigue en flexion des soudures d'assemblage partie acier à rail - insert en acier austénoferritique - partie terminale effilée en acier à haute teneur en manganèse, la section sera avantageusement renforcée localement au niveau du profil de raccordement des 3 parties, dans les zones non au contact des profils de roues des convois ferroviaires, telles qu'âmes et patins.

Il n'y a pas de limite géométrique gênante puisque l'insert et la partie terminale en acier à haut manganèse sont réalisés par moulage suivi d'un usinage; quant à la section d'acier à rail au voisinage de la soudure avec l'insert, elle peut être augmentée par tout procédé tel que forgeage à chaud d'écrasement en bout, rechargement par soudure, suivis du traitement thermique approprié pour ne pas avoir de constituants de trempe fragiles, et d'un usinage localisé.

Ce procédé de fabrication possède, de par la conception de réalisation, une grande souplesse permettant une réalisation "sur mesure" la mieux adaptée au cas d'utilisation de chaque aiguille.

L'insert est soudé à la partie en acier à rail par une méthode de soudage appropriée telle par exemple qu'étincelage ou bombardement électronique, puis l'extrémité de ce premier assemblage est traitée thermiquement par refroidissement contrôlé d'environ 900°C jusqu'à la température ambiante pour supprimer les constituants fragiles de la zone affectée thermiquement par la soudure dans la partie acier à rail; on laisse subsister, par tronçonnage, une longueur d'insert d'environ 30 mm.

L'ensemble partie acier à rail - insert, après avoir été mis aux dimensions nécessaires et contrôlé par un moyen non destructif tel que ressuage, ultrasons ou radiographie pour s'assurer de sa parfaite santé métallurgique, est soudé par la face terminale de l'insert à la partie terminale en acier à haute teneur en manganèse, du côté de sa plus grande section.

Cette deuxième soudure, hors un simple refroidissement à l'air ambiant, ne subit aucun traitement thermique; on effectue les contrôles non destructifs de vérification classiques tels que ressuage et 1 ou gammagraphie de cette soudure après un ragréage et / ou usinage de suppression du bourrelet de soudure s'il y a lieu.

La partie terminale en acier à haute teneur en manganèse , ayant une section croissante depuis sa pointe jusqu'à sa zone de raccordement avec l'insert, sera réalisée avantageusement par moulage en mettant à profit cette caractéristique dimensionnelle.

Selon la longueur et le poids de cette partie terminale, elle sera coulée dans des moules métalliques potéyés semi-permanents pour les plus petites longueurs ou dans des moules en sable durci pour les autres cas ; ces moules seront, au cours ou dés la fin du remplissage par le métal liquide, mis en position verticale avec la plus grande section du profil vers le haut afin d'auto-alimenter au maximum les sections les plus faibles par les sections supérieures; cette disposition limite le masselottage final et permet de remplir l'empreinte avec un métal liquide à la température la plus basse possible, donnant une structure de grain très fine au moulage d'acier à haut manganèse favorable à ses propriétés de résistance à l'usure et de ténacité, le traitement thermique ultérieur d'hypertrempe à l'eau depuis environ 1100°C de cet acier ne modifiant pas - ou peu - la grosseur du grain primaire.

L'ensemble ainsi constitué de cette aiguille a une durée de vie plus longue, car la partie terminale effilée la plus soumise à l'usure est en acier à haut manganèse, matériau qui résiste mieux aux phénomènes de frottement - choc - glissement induits par les roues des convois ferroviaires.

Lorsque cette partie est usée, on peut rénover l'aiguille de la même façon en tronçonnant la partie usée en acier à haut manganèse et en la remplaçant par une autre partie en acier à haut manganèse ayant le profil d'origine; cette opération peut être renouvelée plusieurs fois, à concurrence d'une usure limite de la partie acier à rail, le remplacement se limitant à la partie terminale effilée en acier à haut manganèse ou aussi à cette partie et à l'insert en acier austéno-ferritique.

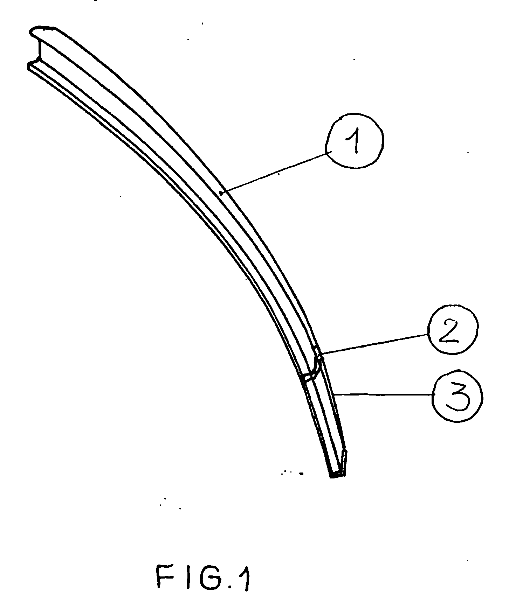

La figure 1 représente une aiguille bimétal ainsi constituée:
- la partie repérée 1 est en acier au carbone dit "acier à rail"
- la partie repérée 2 correspond à l'insert en acier austéno-ferritique qui a été soudé d'abord à la partie 1
- la partie repérée 3 correspond à la partie terminale effilée en acier à haute teneur en manganèse

Les avantages résultants du procédé sont:
- pour le produit réalisé, une durée de vie très supérieure, limitant donc les démontages et immobilisation en voie.
- un coût d'obtention et de réalisation modéré car la partie renouvelable a une longueur très faible par rapport à une même aiguille monométal; l'acier à haute teneur en manganèse est économique et les machines outil d'usinage sont de dimensions raisonnables par rapport à celles qui sont nécessaires pour l'usinage d'une aiguille monométal et les coûts de réalisation réduits sensiblement dans les mêmes proportions.

## Revendications

1. Procédé de réalisation d'une aiguille comprenant deux parties en acier de nuances très différentes, une partie de l'aiguille, la plus longue, étant en acier au carbone ou acier à rail et l'autre partie, la plus courte, correspondant à la zone la plus effilée de l'aiguille, étant en acier à haute teneur en manganèse de la famille des aciers "Hadfield", le procédé étant **caractérisé en ce qu'**il consiste à assembler par soudure la partie en acier à rail à un insert en acier austéno-ferritique à bas carbone moulé, puis après traitement thermique de refroidissement contrôlé à 900°C environ jusqu'à l'ambiante et tronçonnage de l'insert à une longueur de 30 mm environ, à souder la face libre de cet insert à la partie terminale effilée en acier à haut manganèse, et **caractérisé en ce que** l'insert en acier austéno-ferritique est obtenu par moulage suivi d'un traitement thermique d'hypertrempe à l'eau après maintien à une température comprise entre 1030 et 1100°C puis d'un usinage et que la partie terminale effilée en acier à haute teneur en manganèse est obtenue par moulage suivi d'un traitement thermique d'hypertrempe à l'eau après maintien à une température comprise entre 1030 et 1100°C puis d'un usinage superficiel et que pour cette réalisation on peut utiliser une aiguille monométal usagée de laquelle on aura tronçonné la partie terminale effilée usagée ou une aiguille bimétal sur laquelle seule la partie terminale effilée en acier à haute teneur en manganèse ou cette partie et l'insert en acier austéno-ferritique seront remplacés.

2. Procédé selon la revendication 1, **caractérisé en ce que** la partie terminale effilée est réalisée par moulage dans des moules métalliques potéyés semi-permanents ou dans des moules en sable durci, qui sont en position verticale, section la plus grande en haut, dès la fin du remplissage du moule par le métal liquide.

3. Procédé selon la revendication 1, dans lequel la section de l'aiguille est renforcée localement dans la zone de l'insert et les deux zones adjacentes, sur la partie non circulée par les roues des convois ferroviaires.

4. Procédé selon la revendication 1, dans lequel la partie en acier à rail est soumise à un forgeage à chaud d'écrasement en bout suivi d'un traitement thermique et d'un usinage localisé.

5. Procédé selon la revendication 1, dans lequel la partie en acier à rail est soumise à un rechargement par soudure suivi d'un traitement thermique et d'un usinage localisé.

## Claims

1. A method of making a tongue comprising two portions made of steels of very different grades, a longer portion of the tongue being made of carbon steel or rail steel, and the shorter portion corresponding to the most tapered zone of the tongue being made of a steel having a high manganese content of the "Hadfield" family of steels, the method being **characterized in that** it consists in assembling together by welding the portion made of rail steel with an insert made of cast low-carbon austeno-ferritic steel, and then, after controlled cooling heat treatment at about 900°C to ambient temperature and cutting the insert to a length of about 30 mm, in welding the free face of the insert to the tapered terminal portion of high manganese steel, and
**characterized in that** the insert of austeno-ferritic steel is obtained by casting followed by hyperquenching heat treatment in water after being maintained at a temperature lying in the range 1030°C to 1100°C, and then by machining, and that the tapered terminal portion of high manganese content steel is obtained by casting followed by hyperquenching heat treatment in water after being maintained at a temperature lying in the range 1030°C to 1100°C, and then by surface machining, and that for so doing it is possible to use a worn single-metal tongue from which the worn tapering terminal portion has been cut off, or to use a two-metal tongue of which only the tapering terminal portion of high magnesium content steel or said portion plus the insert of austeno-ferritic steel are to be replaced.

2. A method according to claim 1, **characterized in that** the tapering terminal portion is made by casting in semipermanent dressed metal molds or in hardened sand molds that are in a vertical position, with the largest section at the top, as soon as the mold has finished being filled with liquid metal.

3. A method according to claim 1, in which the section of the tongue is locally reinforced in the zone of the insert and in the two adjacent zones over a portion on which the wheels of railway trains do not run.

4. A method according to claim 1, in which the portion made of rail steel is subjected to end-flattening hot forging followed by heat treatment and localized machining.

5. A method according to claim 1, in which the rail steel portion is subjected to being build up by welding followed by heat treatment and localized machining.

## Patentansprüche

1. Verfahren zum Herstellen einer Weichenzunge, die zwei Abschnitte aus sehr unterschiedlichen Stahlsorten umfasst, wobei ein Abschnitt der Weichenzunge, der längste, aus einem Kohlenstoffstahl oder Schienenstahl ist, und der andere Abschnitt, der kürzeste, der dem sich am stärksten verjüngenden Bereich der Weichenzunge entspricht, aus einem Stahl mit hohem Mangangehalt aus der Familie der "Hadfield"-Stähle ist, wobei das Verfahren **dadurch gekennzeichnet ist, dass** es aus den Schritten besteht: Zusammenfügen mittels Verschweißen des Abschnittes aus Schienenstahl mit einem formgegossenen Einsatz aus austenitisch-ferritischem Stahl mit geringem Kohlenstoffgehalt und nach einer Wärmebehandlung durch gesteuertes Abkühlen von ungefähr 900°C auf Umgebungstemperatur und einem Ablängen des Einsatzes auf eine Länge von ungefähr 30 mm, Verschweißen der freien Fläche dieses Einsatzes mit dem sich verjüngenden Endabschnitt aus Stahl mit hohem Mangangehalt, und **dadurch gekennzeichnet, dass** der Einsatz aus austenitisch-ferritischem Stahl durch Formgießen erhalten wird, gefolgt von einer Wärmebehandlung mittels Wasser-Überhärtung nach einem Halten auf einer Temperatur zwischen 1030 und 1100°C und einer anschließenden maschinellen Bearbeitung, und dass der sich verjüngende Endabschnitt aus Stahl mit hohem Mangangehalt durch Formgießen erhalten wird, gefolgt von einer Wärmebehandlung mittels Wasser-Überhärtung nach einem Halten auf einer Temperatur zwischen 1030 und 1100°C und einer anschließenden Oberflächenbearbeitung, und dass man für diese Umsetzung eine abgenutzte Weichenzunge aus nur einem Metall verwenden kann, von der man den abgenutzten sich verjüngenden Endabschnitt abgelängt hat, oder eine Bimetall-Weichenzunge, an der nur der sich verjüngende Endabschnitt aus Stahl mit hohem Mangangehalt oder dieser Abschnitt und der Einsatz aus austenitisch-ferritischem Stahl ersetzt werden.

2. Verfahren nach Anspruch 1, **dadurch gekennzeichnet, dass** der sich verjüngende Endabschnitt durch Formgießen in metallenen Formen, in denen semipermanente Schlichten verwendet werden, oder in Formen aus gehärtetem Sand hergestellt wird, die ab dem Ende der Befüllung der Form durch das flüssige Metall mit dem größten Querschnitt nach oben vertikal angeordnet werden.

3. Verfahren nach Anspruch 1, bei dem der Querschnitt der Weichenzunge im Bereich des Einsatzes und der beiden angrenzenden Zonen auf dem Abschnitt, der nicht von den Rädern der Eisenbahnzüge befahren wird, lokal verstärkt wird.

4. Verfahren nach Anspruch 1, bei dem der Abschnitt aus Schienenstahl einem Warmschmieden zum Stauchen der Spitze, gefolgt von einer Wärmebehandlung und einer lokalisierten maschinellen Bearbeitung unterzogen wird.

5. Verfahren nach Anspruch 1, bei dem der Abschnitt aus Schienenstahl einem Auftragsschweißen, gefolgt von einer Wärmebehandlung und einer lokalisierten maschinellen Bearbeitung unterzogen wird.
